# EUROPÄISCHE PATENTSCHRIFT

(11) **EP 2 599 193 B1**
(45) Veröffentlichungstag und Bekanntmachung des Hinweises auf die Patenterteilung: **28.11.2018**
(21) Anmeldenummer: 11734068.7
(22) Anmeldetag: 12.07.2011
(51) Int. Cl.: H02K 11/026

(54) **ELEKTROMOTOR MIT FILTERELEMENTBEFESTIGUNG**
ELECTRIC MOTOR WITH MOUNTING STRUCTURE FOR NOISE FILTER
MOTEUR ÉLECTRIQUE AVEC FIXATION D'UN FILTRE ANTI-PARASITES

(30) Priorität: 27.07.2010 DE 102010038446
(43) Veröffentlichungstag der Anmeldung: 05.06.2013
(73) Patentinhaber: SEG Automotive Germany GmbH, 70499 Stuttgart (DE)
(72) Erfinder: SANTOS, Kennedy, 13175-660 Sumaré, Sao Paulo (BR); SCHULZ, Eduardo, 71640 Ludwigsburg (DE)
(74) Vertreter: Steinbauer, Florian
(86) Internationale Anmeldenummer: PCT/EP2011/061834
(87) Internationale Veröffentlichungsnummer: WO 2012/013489

(56) Entgegenhaltungen:
- EP-A1- 0 221 304
- DE-A1-102007 018 462
- DE-A1-102008 001 570
- US-A1- 2002 140 304

## Beschreibung

Die vorliegende Erfindung betrifft einen Elektromotor, insbesondere einen Startermotor für eine Brennkraftmaschine, mit einem dem Elektromotor zugeordneten Filterelement zur Reduzierung durch den Elektromotor emittierter elektromagnetischer Interferenzen sowie eine Bürstenhalteranordnung zur Halterung des Filterelements.

### Stand der Technik

Wenngleich die vorliegende Erfindung nachfolgend vornehmlich unter Bezugnahme auf Startermotoren von Brennkraftmaschinen beschrieben wird, sei darauf hingewiesen, dass die erfindungsgemäßen Maßnahmen mit Vorteil auch in anderen elektrischen Systemen zum Einsatz kommen können, insbesondere bei allen Elektromotoren, bei denen eine negative Beeinflussung eines Netzes durch elektromagnetische Interferenzen zu besorgen ist.

Während des Betriebs eines Startermotors, beispielsweise eines Startermotors in an sich bekannten Start-Stop-Systemen, kann die Funktion von elektrischen oder elektronischen Komponenten im Fahrzeug durch elektromagnetische Interferenzen, die durch den Startermotor emittiert werden, beeinträchtigt werden.

Zur Verminderung derartiger Beeinträchtigungen ist beispielsweise aus der DE 10 2007 058 376 B4, welche Hausgeräte betrifft, die Verwendung von sogenannten EMV-Netzfiltern bekannt, mittels welcher ein Netz gegen Störsignale des Motors geschützt wird. Der Begriff Elektromagnetische Verträglichkeit (EMV) bezeichnet dabei den erwünschten Zustand, dass technische Geräte einander nicht wechselseitig mittels ungewollter elektrischer oder elektromagnetischer Effekte störend beeinflussen.

Durch den Motor emittierte Interferenzen umfassen insbesondere Störsignale, welche durch die einen Rotor des Motors bestromenden Bürsten entstehen. Um die Ausbreitung dieser Störsignale ins Netz zu vermeiden, umfasst ein derartiger EMV-Netzfilter üblicherweise einen die Netzsteckerpole koppelnden Kondensator sowie einen parallel dazu geschalteten Ableitwiderstand. Der Ableitwiderstand wird vorteilhafterweise eingesetzt, um Restladungen im Kondensator abzuleiten und somit zu verhindern, dass eine Bedienperson bei ausgeschaltetem Motor über entsprechende Anschlusspole einen Stromschlag erleidet oder dass entsprechende Spannungen ungewollt ins Netz eingespeist werden.

Auch aus der WO 2009/077668 A2 ist zur Verbesserung der elektromagnetischen Verträglichkeit ein Filter unter Verwendung eines Impedanzelements (z. B. eines MOSFET) bekannt, der in einem System zum Speisen einer elektrischen Maschine eingesetzt wird.

Die DE 10 2008 001 570 A1 offenbart einen elektrischen Starter für eine Brennkraftmaschine eines Kraftfahrzeugs mit einer mechanischen Einrichtung und einer elektrischen Einrichtung, wobei die elektrische Einrichtung mit mindestens einem Entstörglied entstört wird.

Aus der EP 0 221 304 A1 geht eine in eine axiale Öffnung eines Motorgehäuses einsteckbare Bürstenbrücke mit einem angeformten Steckergehäuse hervor. Ein ähnliches Gehäuse ist aus der US 2002/0140304 A1 bekannt.

Wie die DE 10 2007 018 462 A1 offenbart, ist es möglich, einen Durchführungskondensator einer Entstörvorrichtung an einem an einem Polgehäuse angeordneten Masseblech anzubringen.

Dem Fachmann ist bekannt, dass derartige Filter ihre optimale Leistung nur dann zeigen, wenn sie hinsichtlich ihrer Leitungspfade so nahe wie möglich an den Bürsten des Elektromotors positioniert sind. Aufgrund des reduzierten Platzangebots, beispielsweise in Startermotoren, und den dort auftretenden hohen Temperatur- und Vibrationsbelastungen von bis zu 55 g, welche eine Beschädigung des Filters verursachen könnten, muss der Filter jedoch außerhalb des Startermotors angebracht werden. Die aus dem Stand der Technik hierzu bekannten Lösungen sind jedoch nicht zufriedenstellend.

Es besteht daher der Bedarf nach verbesserten Möglichkeiten zur Bereitstellung von Filterelementen zur Verminderung von durch Elektromotoren emittierte elektromagnetischer Interferenzen, die eine Bereitstellung außerhalb des Motors, jedoch in naher räumlicher Anordnung zu den Bürsten ermöglichen. Insbesondere ist hierbei eine Anordnung wünschenswert, die den genannten Einsatzbedingungen Rechnung trägt.

### Offenbarung der Erfindung

Vor diesem Hintergrund werden gemäß Anspruch 4 ein Elektromotor, insbesondere ein Startermotor für eine Brennkraftmaschine, mit einem dem Elektromotor zugeordneten Filterelement zur Reduzierung durch den Elektromotor emittierter elektromagnetischer Interferenzen sowie gemäß Anspruch 1 eine entsprechende Bürstenhalteranordnung vorgeschlagen. Vorteilhafte Ausgestaltungen sind Gegenstand der Unteransprüche sowie der nachfolgenden Beschreibung.

### Vorteile der Erfindung

Die erfindungsgemäße technische Lehre beinhaltet, einen Elektromotor mit einer Bürstenhalteranordnung vorzusehen, die als eine Gehäusedurchführung ausgebildete Mittel zur Halterung eines Filterelements aufweist. Vorteilhafterweise kann dadurch eine Bürstenhalteranordnung bereitgestellt werden, die eine unter Verwendung eines Elastomermaterials hergestellte Gehäusedurchführung aufweist, die wiederum entsprechende Halterungsmittel in Form einer an das Filterelements angepassten Aussparung besitzt.

Die Erfindung kann ganz besonders vorteilhaft auch bei existierenden Elektromotoren eingesetzt werden, indem die herkömmliche Gehäusedurchführung durch eine erfindungsgemäße Ausgestaltung ersetzt wird.

Wie dem Fachmann bekannt, weisen Bürstenhalteranordnungen für Starter in Kraftfahrzeugen wenigstens eine Stromschiene auf, die in der Regel unter Verwendung einer isolierender Gehäusedurchführung durch eine Öffnung eines Motorgehäuses hindurch einen Kontakt zwischen einem motoraußenseitig angeordneten Anschluss und den motorinnenseitigen Bürsten bereitstellt. Der zweite Stromanschluss erfolgt üblicherweise über die sog. Bürstenplatte mit Masse. Vorteilhafterweise wird eine entsprechende Gehäusedurchführung nun dahingehend erweitert, dass ein außen auf einem Motorgehäuse aufliegender bzw. anordenbarer Abschnitt vorgesehen wird, welcher eine Aufnahmemöglichkeit für ein entsprechendes Filterelement aufweist. Die Aufnahmemöglichkeit ist dabei vorteilhafterweise, wie erwähnt, als Aussparung ausgebildet, in der das Filterelement angebracht werden kann. Zur Fixierung des Filterelements kann vorteilhaft eine die Aussparung bedeckende Abdeckung vorgesehen sein, welche bspw. das Filterelement einspannt.
Ein besonderer Vorteil liegt hierbei im modularen Aufbau. Einzelne Elemente der Bürstenhalteranordnung, wie z.B. Bürstenhalter mit Stromschiene, Bürstenplatte, Gehäusedurchführung oder Filterelement, können bei Bedarf einfach und ohne Aufwand ersetzt werden. Andere Teile des Startermotors werden durch die Verwendung einer derartigen Bürstenhalteranordnung nicht beeinträchtigt, eine zusätzliche Anpassung ist nicht erforderlich.

Bei einem Beispiel, nicht Teil der beanspruchten Erfindung, mit einer Halterung des Filterelements durch die Bürstenplatte dient die Halterung zugleich als Kontaktierung. Die Halterung und Kontaktierung erfolgt vorzugsweise über Metallkontakte, insbesondere in Form von Nasenkontakten, die motorseitig und/oder filterelementseitig, vorzugsweise in komplementärer Ausgestaltung, vorgesehen sein können.
Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung ausführlich beschrieben.

### Kurze Beschreibung der Zeichnungen

- Figur 1: zeigt eine Teilquerschnittsansicht eines Elektromotors entsprechend eines Beispiels, das nicht Teil der beanspruchten Erfindung ist.
- Figur 2: zeigt eine schematische perspektivische Teilaußenansicht des Elektromotors gemäß Figur 1.
- Figur 3: zeigt eine schematische perspektivische Teilansicht einer in dem Motor Figur 1 und 2 verbauten Bürstenhalteranordnung.
- Figur 4: zeigt eine weitere schematische perspektivische Teilansicht der Bürstenhalteranordnung gemäß Figur 3.
- Figur 5: zeigt eine schematische perspektivische Ansicht einer Gehäusedurchführung gemäß einer bevorzugten Ausführungsform der Erfindung von einer Außenseite.
- Figur 6: zeigt eine schematische perspektivische Ansicht der Gehäusedurchführung gemäß Figur 5 von einer Innenseite.

### Ausführungsform(en) der Erfindung

In den nachfolgenden Figuren bezeichnen gleiche Bezugszeichen gleiche Elemente. Auf eine wiederholte Erläuterung dieser Elemente wird der Übersichtlichkeit halber verzichtet.

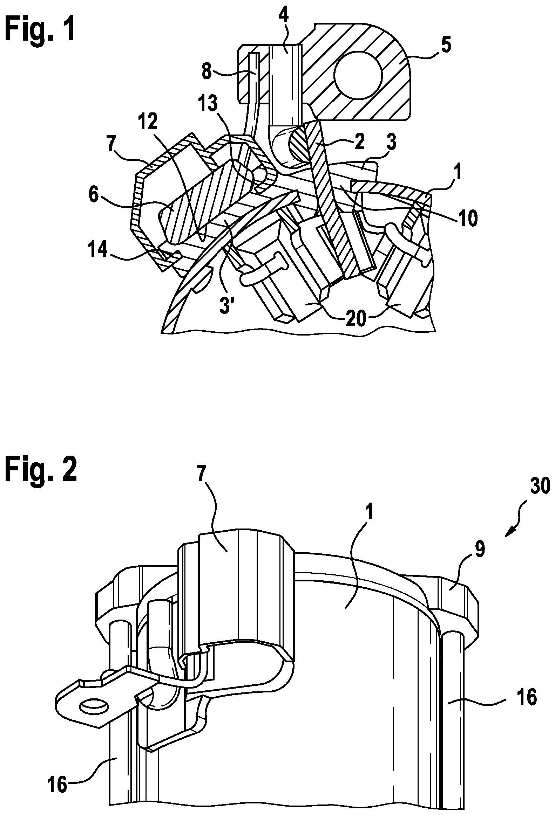

Figur 1 zeigt eine schematische Teilquerschnittsansicht eines Elektromotors 30 gemäß eines Beispiels, das nicht Teil der beanspruchten Erfindung ist. Der Elektromotor weist ein Polgehäuse 1 auf, das die inneren Komponenten des Elektromotors (in der Figur teilweise nicht dargestellt) einschließt. Bei dem Elektromotor 30 handelt es sich insbesondere um einen Starter für ein Kraftfahrzeug.

Bestimmte Komponenten des Elektromotors 30, beispielsweise Bürstenelemente 20, sind mit einer Stromschiene 2 verbunden, welche durch eine Öffnung 10 des Polgehäuses 1 hindurch angeordnet und von dem Polgehäuse 1 durch eine hier als Elastomerdichtung bzw. -durchführung ausgebildete Gehäusedurchführung 3 isoliert ist. Die u.a. hierdurch gebildete Bürstenhalteranordnung weist eine elektrische Verbindung 4, beispielsweise in Form eines Kupferkabels, auf, welches sowohl mit der Stromschiene 2 als auch mit einem elektrischen Anschluss 5 verbunden ist, um eine Spannungsversorgung an die inneren Komponenten des Motors bereitzustellen.

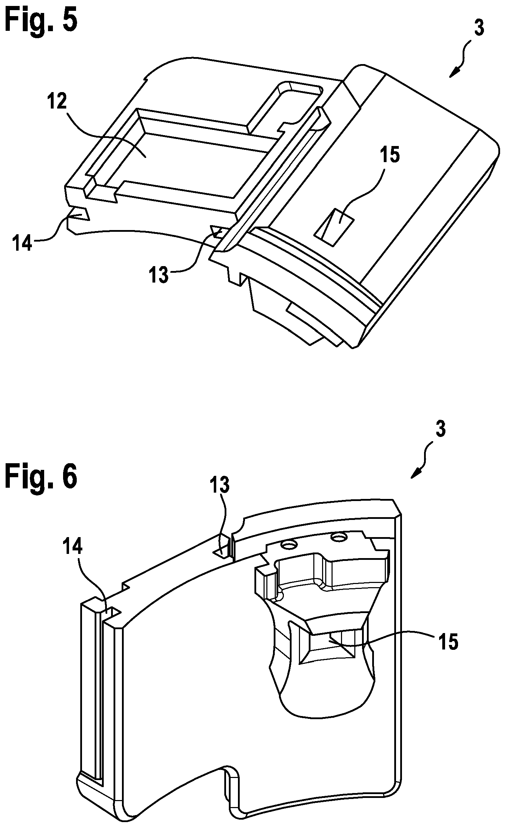

Die Gehäusedurchführung 3 weist einen außen auf dem Motorgehäuse 1 aufliegenden Bereich 3' auf, welcher seinerseits mit einer Aussparung 12 zur Aufnahme eines Filterelements 6 versehen ist. Das Filterelement 6 ist mit einer Abdeckung 7 bedeckt, welche in entsprechend vorgesehene Nuten 13, 14 (vgl. Figur 5) der Gehäusedurchführung 3 eingreift und hierdurch befestigt wird. Die Gehäusedurchführung 3 ist damit als Mittel zur Halterung des Filterelements 6 ausgebildet. Die Abdeckung 7 ist vorzugsweise als flexible Plastikkappe ausgebildet, welche, vorzugsweise entfernbar, an der Gehäusedurchführung 3 anbringbar ist und einen ausreichenden Schutz des darunter befindlichen Filterelements 6 ermöglicht. Die Abdeckung dient gleichzeitig zur Fixierung des Filterelements 6, indem sie es in die Aussparung 12 drückt.

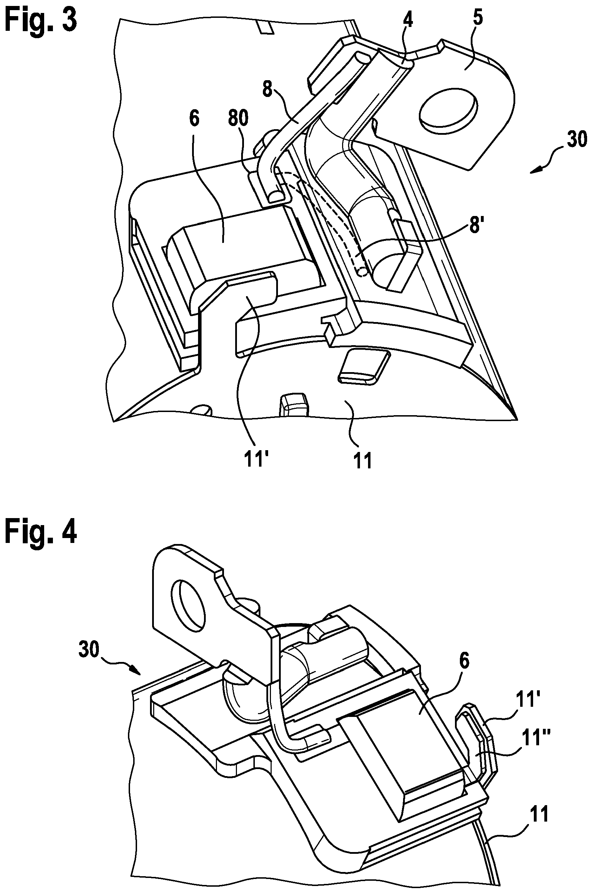

Das Filterelement 6 ist mit dem Stromanschluss 5 über eine elektrische Verbindung 8 verbunden. Wie bereits zuvor erläutert, erfolgt eine entsprechende Anordnung vorteilhafterweise dergestalt, dass eine kürzestmögliche Verbindung zwischen dem Filterelement 6 und der Stromschiene 2 hergestellt wird. Wie unten unter Bezugnahme auf Figur 3 erläutert, kann eine nochmals kürzere Verbindung dadurch geschaffen werden, dass die elektrische Verbindung 8 direkt mit der elektrischen Verbindung 4 gekoppelt wird.

In den nachfolgenden Figuren 2, 3 und 4 sind jeweils Außenansichten eines mit einem Filterelement 6 versehenen Elektromotors dargestellt. Wie in der perspektivischen Ansicht des Elektromotors in Figur 2 ersichtlich, ist das Filterelement unter der Abdeckung 7 angeordnet. Die räumliche Anordnung des Filterelements 6 in Bezug auf das Motorgehäuse 1 erfolgt derart, dass eine kürzestmögliche Verbindung zwischen dem Filterelement und den Bürsten realisiert wird. Der Motor weist eine Endkappe 9 auf, die mit einer Antriebsendplatte auf der entgegengesetzten Seite des Motorgehäuses (nicht dargestellt) über Streben bzw. Bolzen 16 verbunden ist.

In Figur 3 ist der Elektromotor 30 ohne Abdeckung 7 und ohne Motorendkappe 9 dargestellt. Aus dieser Figur ist ersichtlich, dass eine gemäß dieser Ausführungsform vorgesehene Bürstenplatte 11 einen Nasenkontakt 11' aufweist, welcher ebenfalls Befestigungsmittel für das Filterelement 6 vorgesehen ist. Durch die Verwendung der zuvor erläuterten Bolzen 16 wird die Bürstenplatte zwischen das Motorgehäuse 1 und die Endplatte 9 des Motors geklemmt, ferner erfolgt hierdurch eine Befestigung der Gehäusedurchführung 3 in der Öffnung 10 des Motorgehäuses. Die Bürstenplatte dient zur Verbindung der negativen Bürsten und des Filterelements 20 mit Masse.

Aus Figur 3 ist ferner ersichtlich, wie eine alternative Ankopplung des Filterelements 6 an die Stromschiene 10 realisiert sein kann. Um, wie oben erwähnt, eine kurze Verbindung zu schaffen, kann das Filterelement 6, beispielsweise über einen Anschlussbereich 80, anstatt mit dem Stromanschluss 5 auch direkt über eine gestrichelt dargestellte Verbindung 8', mit dem Stromanschluss 4 und damit direkt mit der Stromschiene 10 verbunden sein.

Wie insbesondere aus Figur 4 ersichtlich, in der der Elektromotor 30 ohne Abdeckung 7 und ohne Motorendkappe 9 dargestellt ist, ist nach Anbringung des Filterelements 6 in der Aussparung 12 (verdeckt) der Gehäusedurchführung 3 ein direkter Kontakt zwischen dem Nasenkontakt 11' der Bürstenplatte 11 und einem komplementären Nasenkontakt 11" des Filterelements 6 herstellbar. Der (mechanische und/oder elektrische) Kontakt kann beispielsweise durch Schweißen, Löten oder Nieten hergestellt werden. Dadurch dient die Halterung des Filterelements 6 an der Bürstenplatte 11 zugleich als Kontaktierung.

In Figur 5 ist die Elastomer-Gehäusedurchführung 3 gemäß einer besonders bevorzugten Ausführungsform der Erfindung im Detail dargestellt.

Wie aus Figur 5 ersichtlich, weist die Elastomer-Gehäusedurchführung eine erste Öffnung 15 für die Gehäusedurchführung einer Stromschiene 2 auf. Die Öffnung 15 kann insbesondere Arretierungsmerkmale zur Befestigung bzw. räumlichen Fixierung der Stromschiene beinhalten. Wie erwähnt, ist eine Aufnahme 12 zur Anbringung eines Filterelements 6 vorgesehen, die zur Verwendung eines bestimmten Filterelements oder verschiedener verwendbarer Filterelemente bemaßt sein kann.

Durch die Verwendung von Elastomermaterial im Bereich 12 der Gehäusedurchführung kann beispielsweise eine besonders gute Vibrationsdämpfung für ein Filterelement bereitgestellt werden. Wie erwähnt, weist die Gehäusedurchführung 3 Nuten 13, 14 zur Aufnahme einer Abdeckung 7 auf.

In Figur 6 ist, wie in Figur 5, die Gehäusedurchführung 3 gemäß einer besonders bevorzugten Ausführungsform der Erfindung dargestellt, wobei, im Gegensatz zu Figur 5, in der eine Ansicht von außen, d.h. von einer Außenseite des Motors dargestellt ist, in Figur 6 die entsprechende Ansicht von innen, also von einer Motorinnenseite dargestellt ist. Wie in Figur 5 ist die Öffnung 15 zur Aufnahme der Stromschiene 2 vorgesehen, ebenso sind in der Figur 6 die Nuten zur Aufnahme der Abdeckung 7 zu sehen.

## Patentansprüche

1. Bürstenhalteranordnung zur Verwendung in einem Elektromotor, mit wenigstens einem dem Elektromotor zugeordneten Filterelement (6) zur Reduzierung durch den Elektromotor emittierter elektromagnetischer Interferenzen und Mitteln (3) zur Halterung des wenigstens einen Filterelements (6), **dadurch gekennzeichnet, dass** die Mittel (3) zur Halterung des wenigstens einen Filterelements (6) eine unter Verwendung eines Elastomermaterials hergestellte Gehäusedurchführung (3) zur isolierten Anordnung eines stromführenden Leiters (2) eines Bürstenhalters in dem Gehäuse des Elektromotors aufweisen, wobei die Gehäusedurchführung (3) eine Öffnung (15) für den Leiter (2) und wenigstens einen nach Einbau in den Elektromotor außen auf dem Motorgehäuse (1) zu liegen kommenden Abschnitt (3') aufweist, der wenigstens eine an das wenigstens eine Filterelement angepasste Aussparung (12) zur Aufnahme des wenigstens einen Filterelements (6) aufweist.

2. Bürstenhalteranordnung nach Anspruch 1, bei dem die Mittel (3) zur Halterung eine das wenigstens eine Filterelement (6) fixierende Abdeckung (7) aufweisen.

3. Bürstenhalteranordnung nach Anspruch 1 oder 2, bei dem die Gehäusedurchführung (3) Mittel (13, 14) zur Aufnahme der Abdeckung (7) aufweist.

4. Elektromotor, insbesondere Startermotor einer Brennkraftmaschine, mit einer Bürstenhalteranordnung nach einem der Ansprüche 1 bis 3.

5. Elektromotor nach Anspruch 4, bei dem eine Stromschiene (2) zur Versorgung von Motorkomponenten und eine elektrische Verbindung (8') zur Verbindung der Bürstenelemente mit der Stromschiene vorgesehen sind.

6. Elektromotor nach Anspruch 5, bei dem die Motorkomponenten Bürstenelemente (20) sind.

## Claims

1. A brush holder arrangement for use in an electric motor, comprising at least one filter element (6) associated with the electric motor for reducing electromagnetic interference emitted by the electric motor and means (3) for holding said at least one filter element (6), **characterised in that**
the means (3) for holding said at least one filter element (6) have a housing feed-through (3) made using an elastomeric material for the insulated arrangement of a current-carrying conductor (2) of a brush holder in the housing of the electric motor, wherein the housing feed-through (3) has an opening (15) for the conductor (2) and at least one section (3') lying outside on the motor housing (1) after installation in the electric motor, which section contains at least one recess (12) for receiving the at least one filter element (6), said recess being adapted to said at least one filter element.

2. A brush holder arrangement according to claim 1, in which the means (3) for holding have a cover (7) which attaches said at least one filter element (6).

3. A brush holder assembly according to claim 1 or 2, wherein the housing feed-through (3) has means (13, 14) for receiving the cover (7).

4. An electric motor, in particular a starter motor of an internal combustion engine, with a brush holder arrangement according to any one of claims 1 to 3.

5. An electric motor according to claim 4, in which a bus bar (2) for supplying motor components and an electrical connection (8') for connecting the brush elements to the bus bar are provided.

6. An electric motor according to claim 5, wherein the motor components are brush elements (20).

## Revendications

1. Ensemble de porte-balai destiné à être utilisé dans un moteur électrique, comportant au moins un élément de filtrage (6) couplé au moteur électrique pour réduire des interférences électromagnétiques émises par le moteur électrique, et des moyens (3) pour supporter le au moins un élément de filtrage (6), **caractérisé en ce que** les moyens (3) pour supporter le au moins un élément de filtrage (6) comportent une traversée de boîtier (3) fabriquée en utilisant une matière élastomère pour agencer de manière isolée un fil conducteur (2) d'un porte-balai dans le boîtier du moteur électrique, dans lequel la traversée de boîtier (3) comporte une ouverture (15) pour le fil (2) et au moins une partie (3') placée à l'extérieur sur le boîtier de moteur (1) après un montage dans le moteur électrique, laquelle partie comporte au moins un évidement (12) adapté au au moins un élément de filtrage pour recevoir le au moins un élément de filtrage (6).

2. Ensemble porte-balai selon la revendication 1, dans lequel les moyens de support (3) comportent un couvercle (7) fixant le au moins un élément de filtrage (6).

3. Ensemble porte-balai selon la revendication 1 ou 2, dans lequel la traversée de boîtier (3) comporte des moyens (13, 14) pour recevoir le couvercle (7).

4. Moteur électrique, en particulier un moteur de démarreur d'un moteur à combustion interne, ayant un ensemble porte-balai selon l'une des revendications 1 à 3.

5. Moteur électrique selon la revendication 4, dans lequel une barre conductrice (2) est prévue pour alimenter des composants de moteur et une connexion électrique (8') est prévue pour relier des éléments de balai de la barre conductrice.

6. Moteur électrique selon la revendication 5, dans lequel les composants de moteur sont des éléments de balai (20).
